# EUROPÄISCHE PATENTSCHRIFT

(11) **EP 0 681 073 B1**
(45) Veröffentlichungstag und Bekanntmachung des Hinweises auf die Patenterteilung: **27.05.1998**
(21) Anmeldenummer: 95102812.5
(22) Anmeldetag: 28.02.1995
(51) Int. Cl.: E04G 15/06, B28B 17/00, B28B 1/52

(54) **Schalkörper-Wandteil mit Sollbruchstellen und Verfahren zur Herstellung von Sollbruchstellen**
Formwork panel with breaking places and process for making the breaking places
Panneau pour coffrage avec lignes de ruptures et procédé d'obtention des lignes de ruptures

(30) Priorität: 03.05.1994 DE 4415504
(43) Veröffentlichungstag der Anmeldung: 08.11.1995
(73) Patentinhaber: SCHÖCK BAUTEILE GmbH, D-76534 Baden-Baden (DE)
(72) Erfinder:
(74) Vertreter: Brommer, Hans Joachim, Dr.-Ing.

(56) Entgegenhaltungen:
- EP-A- 0 014 658
- EP-A- 0 542 116
- AT-A- 361 202
- FR-A- 2 355 635
- GB-A- 911 224

## Beschreibung

Die Erfindung geht aus von einem Wandteil für Schalkörper, insbesondere für die Erzeugung von Aussparungen mit unterschiedlichen Abmessungen in Betonbauteilen, wobei das Wandteil aus faserverstärkten, abbindbaren Materialien wie Beton, Harzen oder dergleichen besteht und zur Bildung möglicher Trennzonen Sollbruchstellen aufweist.

Ein derartiges Wandteil ist beispielsweise in der europäischen Patentanmeldung EP-A-0 542 116 beschrieben und ist baukastenartig aus einer Vielzahl gleichartiger und rasterartig nebeneinander angeordneter Wandelemente aufgebaut, die über Trennzonen einstückig miteinander verbunden sind. Durch diese rasterartige Unterteilung ist es möglich, Wandteile unterschiedlicher Länge auf der Baustelle herzustellen und zu einem Schalkörper der gewünschten Größe zusammenzusetzen. Die Verkürzung der Wandteile erfolgt mit Hilfe der die Trennzone bildenden Sollbruchstellen, die durch einseitige Kerbung des Wandteils gebildet sind.

Die vorteilhafte rasterartige Unterteilung bedingt allerdings, daß nicht alle Sollbruchstellen zur Trennung bzw. Verkürzung der Wandteile verwendet werden und somit die Wandteile auch im querschnittsreduzierten Bereich der nicht verwendeten Sollbruchstellen vom Frischbeton beaufschlagt werden. Genau dieser Bereich der gekerbten Sollbruchstellen zeichnet sich jedoch durch eine verminderte Druckfestigkeit aus, die zum kontrollierten Brechen entlang der Sollbruchstellen noch benötigt wurde, nun aber für eine Schwächung des Wandteils im Bereich unbenutzter Sollbruchstellen sorgt. Diese Schwächung kann bis zum Einknicken der Wandteile entlang der unbenutzten Sollbruchstellen führen, zumindest aber eine Anpassung der Wandteildimensionierung erfordern, wodurch die Vorteile der an unterschiedliche Schalkörper anpassbaren Wandteile wieder aufgewogen werden.

Zwar ist es bereits aus der EP-A-0 014 658 bekannt, bei Gipsfaserplatten, die beispielsweise zum Abhängen von Zimmerdecken oder zum Verkleiden von Wandelementen verwendet werden, als Scharniere bezeichnete Biegebereiche dadurch herzustellen, daß die Fasern bei noch flüssigem Gips auf einen bestimmten Querschnittsbereich reduziert werden. Hierbei wird entweder das Beaufschlagen des Fasermaterials so lange aufrechterhalten, bis der Gips steht. um ein erneutes Auffüllen der Biegebereiche zu verhindern; oder der nachgeflossene Gips wird nachträglich wieder aus diesen Biegebereichen entfernt, indem in den ausgehärteten Gips Nuten eingefräst werden. Auch die FR-A-2 355 635 beschreibt das Prinzip der Herstellung von als Scharniere bezeichneten Biegebereichen bei Kunstharzplatten, welche durch ein Heizelement lokal aufgewärmt und damit verformbar gemacht werden kann, wobei durch das Eindrükken des Heizelementes einerseits der Querschnitt der Platte reduziert und andererseits die Dichte im verbleibenden querschnittsreduzierten Bereich durch das Eindrücken erhönt wird.

Hiervon ausgehend liegt der vorliegenden Erfindung die Aufgabe zugrunde, für Wandteile der eingangs beschriebenen Art Sollbruchstellen zur Verfügung zu stellen. die sich dadurch auszeichnen, daß sie zum einen ein kontrolliertes Brechen des Wandteils zum Durchtrennen bzw. Verkürzen der Seitenwandteile ermöglichen, ohne daß jedoch zum anderen die für die Verwendung als Schalkörper benötigte Stabilität vermindert wird.

Diese Aufgabe wird erfindungsgemäß dadurch gelöst, daß das Wandteil im Bereich der Sollbruchstellen in Wanddickenrichtung einen zumindest nahezu faserfreien Teilbereich aufweist und daß die Wandteil-Dicke im Bereich der Sollbruchstelle nicht oder nur in geringem Maße reduziert ist. Dies wird dadurch erreicht, daß nur die Fasern, jedoch kein oder nur wenig des Matrix-Materials aus dem zugspannungsfreien Bereich heraus verdrängt werden. Da bei faserverstärkten Wandteilen das Matrix-Material wie etwa Beton, Mörtel oder Kunststoff vor allem zur Aufnahme der Druckkräfte dient, während die Zugspannungen hauptsächlich von den als Armierung fungierenden Fasern aufgenommen werden, ergibt sich der erfindungsgemäße Vorteil, daß eine nahezu gleichbleibende Druckfestigkeit erzielt werden kann, jedoch die Biegefestigkeit - wie für die Funktion als Sollbruchstelle zum gezielten Durchbrechen erforderlich - lokal herabgesetzt ist. Im Gegensatz hierzu war bei herkömmlichen Sollbruchstellen aber gerade die Druckfestigkeit aufgrund der starken Querschnittsschwächung reduziert.

Zweckmäßigerweise sind die Fasern im Bereich der Sollbruchstellen in Wanddickenrichtung ungleich verteilt und lokal konzentriert, wodurch die Zugfestigkeit nicht über den gesamten Querschnitt, sondern nur in dem faserarmen Teilbereich reduziert ist, während sie auf der anderen Seite im Bereich mit erhöhter Faserkonzentration entsprechend vergrößert ist.

Der Flüssigbetondruck, der auf die Schalkörper ausgeübt wird, wird in einen Druckspannungsbereich auf der dem Beton zugewandten Seite des Wandteils und einen Zugspannungsbereich auf der dem Beton abgewandten Seite aufgeteilt, weshalb es besonders vorteilhaft ist, wenn die Fasern auf der dem Ortbeton abgewandten Seite konzentriert sind, während sich der nahezu faserfreie Teilbereich - der Kerbung bei den herkömmlichen Sollbruchstellen entspricht - auf der dem Ortbeton zugewandten Seite des Wandteils befindet.

Zweckmäßigerweise erstreckt sich der nahezu faserfreie Teilbereich über weniger als die Hälfte der Wandteil-Dicke, wodurch die Zugfestigkeit in der nicht auf Zug sondern nur auf Druck beanspruchten, dem Ortbeton zuwandten Seite reduziert ist, ohne daß gleichzeitig die Stabilität des Wandteils im Bereich der Sollbruchstellen herabgesetzt wäre.

Aufgrund der erfindungsgemäßen Beschaffenheit der Sollbruchstellen, die keinen negativen Einfluß auf die Stabilität des Wandteils mehr ausüben, ergibt sich nun der Vorteil, daß die Sollbruchstellen rasterartig über das Wandteil verteilt werden können, um Schalkörper möglichst unterschiedlichster Längen auf der Baustelle herstellen zu können, ohne daß hiermit eine Qualitätseinbuße des Wandteils verbunden wäre.

Zur Herstellung von Sollbruchstellen in dem erfindungsgemäßen Wandteil empfiehlt es sich, daß die vor dem Abbinden im Wandteil-Material schwimmenden Fasern im Bereich der Sollbruchstellen aus einem Teilbereich der Wandteil-Dicke heraus verdrängt werden. Diese lokale Verdrängung der Fasern erfolgt zweckmäßigerweise mit Hilfe eines in das flüssige Wandteilmaterial eintauchenden Werkzeuges mit einer Tiefe, die etwa maximal der Hälfte der Wandteil-Dicke entspricht. Die Fasern verteilen sich nach dem Verdrängen aufgrund des zähflüssigen Wandteil-Materials kaum wieder in den faserfreien Teilbereich der nach dem Entfernen des Werkzeuges allerdings wieder durch das Wandteil-Material aufgefüllt wird.

Als Werkzeug für das Herstellen der Sollbruchstelle sind verschiedene Varianten denkbar: Am einfachsten ist es, wenn das Werkzeug aus einem zylinder- oder quaderförmigen schmalen Bauteil besteht, beispielsweise in Form einer Klinge, und dieses Werkzeug in paralleler Orientierung zur geplanten Sollbruchstelle senkrecht zum Wandteil in das flüssige Material eingetaucht und danach wieder entfernt wird. Es ist aber auch möglich, daß das Werkzeug aus einem schalen Bauteil beispielsweise in Form einer Rolle gebildet wird, die einseitig in einem Endbereich der Sollbruchstelle eingetaucht, entlang des Sollbruchstellen-Verlaufs durch das flüssige Wandteil-Material bis zum anderen Endbereich bei gleichbleibender Eintauchtiefe gezogen und von dort wieder entfernt wird.

Egal welches Verfahren bzw. Werkzeug für das Verdrängen der Fasern aus dem geplanten faserfreien Teilbereich heraus verwendet wird, das Eintauchen und Wiederherausziehen des Werkzeuges sollte ohne wesentliche Erschütterungen und Vibrationen erfolgen, um das Zurückschwimmen der Fasern zu verhindern. Nur dann können die oben geschilderten Vorteile der gleichbleibenden Druckfestigkeit erreicht werden.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: einen Querschnitt durch ein Wandteil mit erfindungsgemäßer Sollbruchstelle bestehend aus einem faserfreien Teilbereich;
- Figur 2: eine Schemazeichnung für ein erfindungsgemäßes Herstellungsverfahren von Sollbruchstellen; und
- Figur 3: eine Anwendungsform erfindungsgemäßer Wandteile zur Bildung eines Schalkörpers.

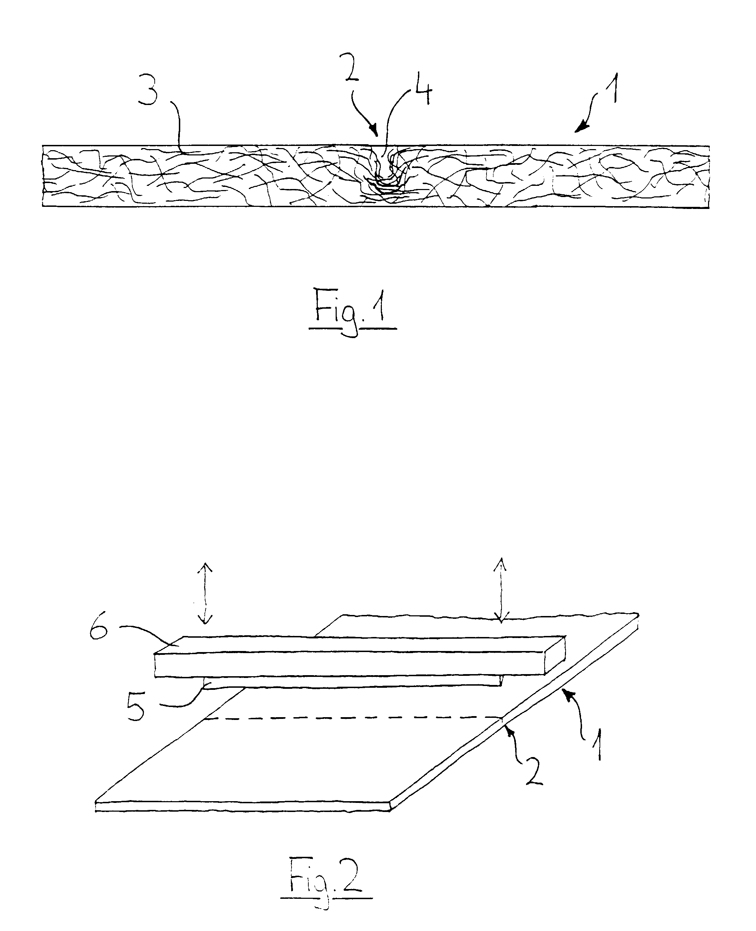

In Figur 1 ist ein Wandteil 1 für Schalkörper in geschnittener Seitenansicht dargestellt. Das Wandteil besteht aus Beton mit Glasfaserzusätzen, deren gleichmäßige stochastische Verteilung aus der geschnittenen Seitenansicht zu erkennen ist. Ungefähr in Bildmitte von Figur 1 ist eine mögliche Trennzone 2 des Wandteils 1 dargestellt, die daran zu erkennen ist, daß die Glasfasern 3 aus einem Teilbereich 4 verdrängt sind.

Dieser Teilbereich 4 der Wanddicke ist gänzlich oder nahezu mit Beton aufgefüllt, so daß der Wandquerschnitt sich in diesem Bereich nicht von der Umgebung unterscheidet. Der faserfreie Teilbereich 4, der sich aufgrund der fehlenden Glasfasern durch verminderte Zugfestigkeit auszeichnet und die Trennzone 2 bzw. Sollbruchstelle bildet, ist auf der dem Ortbeton zugewandten Seite des Wandteils angeordnet und erstreckt sich ungefähr nur über den halben Dickenbereich, um nicht die Zugfestigkeit in dem dem Ortbeton abgewandten Teilbereich zu reduzieren, der für die Aufnahme des Betondrucks wichtig ist.

Ein Brechen des Wandteils entlang der Sollbruchstelle 2 wird wie bei den Wandteilen mit herkömmlichen Sollbruchstellen erreicht, beispielsweise durch Auflegen des sich links vom Teilbereich 4 erstreckenden Wandteilabschnittes auf einer starren Unterlagen und Herunterdrücken des sich rechts vom Teilbereich 4 befindlichen Wandteilabschnittes, wodurch die hierdurch ausgeübten Biegespannungen im oberen Wandteilquerschnitt wirksam werden und das Wandteil zuerst im dortigen Teilbereich kontrolliert bricht.

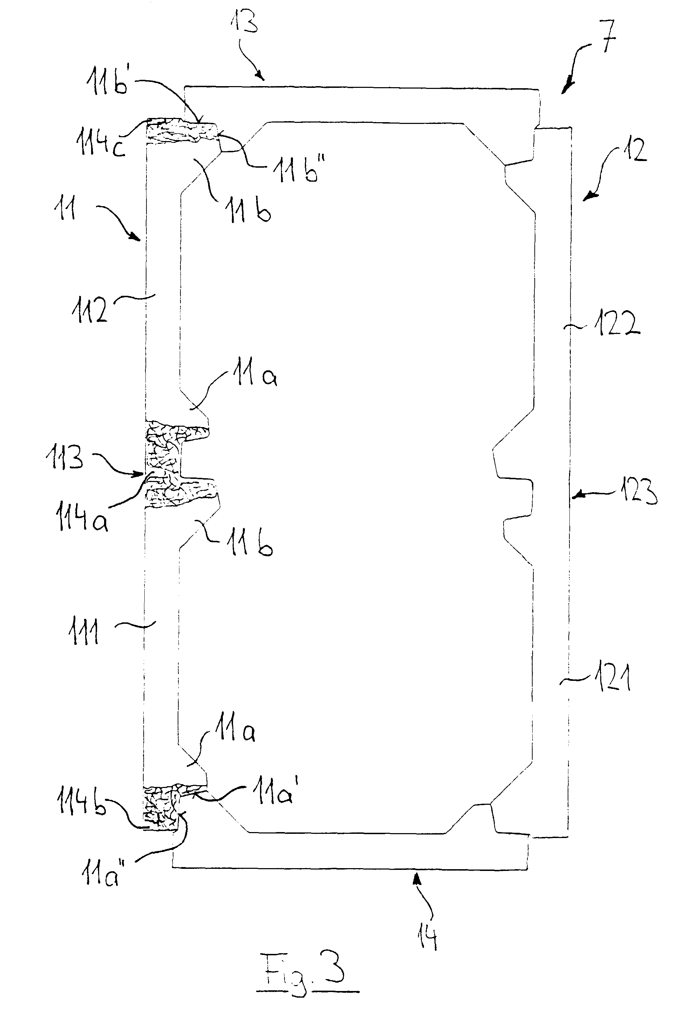

In Figur 2 ist ein Verfahren zur Herstellung von Sollbruchstellen angedeutet. Das Wandteil 1 befindet sich hierbei in einem Zustand, in dem der Beton noch nicht abgebunden ist und demgemäß die (nicht dargestellten) Glasfasern im zähflüssigen Beton schwimmen. In diesem Zustand wird auf das horizontal liegende Wandteil von oben ein schmales Werkzeug in Form einer Klinge 5, die über einen Verfahrbalken 6 höhenverstellbar angeordnet ist, zubewegt und in den flüssigen Beton bis zur halben Wandteil-Dicke oder weniger ein- oder mehrmals eingedrückt, um die Glasfasern zur Herstellung des faserfreien Teilbereiches 4 in Richtung der unteren Wandteilhälfte und in seitlicher Richtung zu verdrängen. Hierauf wird der Verfahrbalken zusammen mit der Klinge wieder nach oben abgehoben, woraufhin sich der faserfreie Teilbereich ganz oder teilweise mit Beton füllt, die Fasern aber nicht wieder zurückschwimmen. Die Sollbruchstelle 2 ist nach dem Abbinden des Wandteils anhand ihrer Textur zu erkennen, da sich der faserfreie Teilbereich 4 im Vergleich zu seiner Umgebung durch eine etwas nach innen gewölbte Oberfläche auszeichnet.

In Figur 3 ist ein rechteckiger Schalkörper 7 für die Erzeugung eines Deckendurchbruches dargestellt, der aus vier Wandteilen, nämlich zwei Längswandteilen 11 und 12 und zwei Querwandteilen 13 und 14 zusammengesetzt ist. Jedes Wandteil weist an seinen Enden Vorsprünge in Form von nach innen ragenden, etwa vertikal verlaufenden Leisten 11a und 11b bzw. 12a und 12b bzw. 13a und 13b bzw. 14a und 14b auf. Wesentlich ist, daß diese Leisten Anschlagflächen 11a' und 11b' usw. bilden, an denen sich jeweils die benachbarten Wandteile und zwar vorzugsweise ebenfalls über ihre vorspringenden Leisten abstützen. Außerdem weist jede Leiste Anschlagflächen 11a'' und 11b'' usw. auf, über die es sich selbst an den zuvor erwähnten Anschlagflächen des benachbarten Wandteiles abstützt. (Der Einfachheit halber sind lediglich die Anschlagflächen und Leisten des Wandteiles 11 mit Bezugszeichen versehen.)

Die genannten Anschlagflächen jeder Leiste verlaufen grob rechtwinklig zueinander und sind bezüglich des Wandteiles so ausgerichtet, daß an jeder Stoßstelle jeweils zwei Flächenpaarungen zustande kommen, längs denen benachbarte Wandteile flächig und über die gesamte Wandteilhöhe aneinander liegen. Dadurch stützt sich jedes Wandteil gegenüber den in das Schalkörperinnere gerichteten Betonkräften an seinen beiden Nachbarwandteilen ab und zugleich erhält man eine flüssigbetondichte Anlage an den Stoßstellen.

Wie aus Figur 3 weiter zu erkennen ist, bestehen die Längswandteile 11 und 12 jeweils aus zwei gleichartigen Wandelementen 111 und 112 sowie 121 und 122, die in Form und Größe dem Querwandteil 13 und 14 entsprechen. Die Wandelemente 111 und 112 sowie 121 und 122 sind jeweils über eine Trennzone 113 bzw. 123 einstückig miteinander verbunden. Diese Trennzone muß naturgemäß zwischen benachbarten Anschlagleisten 11a und 11b bzw. 12a und 12b liegen, wobei wesentlich ist, daß die Anschlagflächen an beiden Enden eines jeden Wandelementes 111, 112, 121 und 122 außerhalb der Trennzone 113 bzw. 123 liegen, damit ihre für das Rastermaß der Wandteile entscheidende Position nicht davon abhängig ist, wie genau und mit welchem Materialabfall die Trennung benachbarter Wandelemente erfolgt. Auf diese Weise kann die Produktion beschränkt werden auf Wandteile, die beispielsweise aus zehn Elementen bestehen und aus denen dann bauseitig die einzelnen Elemente in der gewünschten Länge abgetrennt werden. Damit lassen sich dann beliebige rechteckige Aussparungen zum Beispiel im 10 cm-Rastermaß herstellen.

Der Aufbau der Trennzone 113 in der Mitte des Wandteils 11 sowie der gleichartigen Trennzonen an den beiden Enden des Wandteils 11 sind zur Verdeutlichung aufgebrochen dargestellt. Hierbei ist zu erkennen, daß die Trennzonen aus faserfreien Teilbereichen 114a im Mittelbereich des Wandteils 11 und 114b und 114c an den seitlichen Enden des Wandteils 11 gebildet sind, letztere aber zur Herstellung der beiden Enden durchtrennt wurden und somit von diesen nur noch jeweils eine Hälfte vorhanden und abgebildet ist.

Zusammenfassend bietet die Erfindung den Vorteil, daß man einen Schalkörper erhält, der im Baukastensystem aus einzelnen Wandteilen über Sollbruchstellen rasterartig veränderlicher Länge besteht, der in einfacher Weise auf der Baustelle zusammengesetzt werden kann, bei dem aber die Wandteile im Bereich der Sollbruchstellen nicht oder nur geringfügig in ihrer Druckfestigkeit reduziert sind, so daß die Sollbruchstellen keine Stabilitätsverschlechterung des Schalkörpers ergeben.

## Patentansprüche

1. Wandteil (1, 11, 12, 13, 14) für Schalkörper, insbesondere für die Erzeugung von Aussparungen mit unterschiedlichen Abmessungen in Betonbauteilen, wobei das Wandteil aus faserverstärkten, abbindbaren Materialien wie Beton, Harzen oder dergleichen besteht und zur Bildung möglicher Trennzonen Sollbruchstellen (2, 113, 123) aufweist,
dadurch gekennzeichnet,
daß das Wandteil (1, 11, 12, 13, 14) im Bereich der Sollbruchstellen (2, 113, 123) in Wanddickenrichtung einen zumindest nahezu faserfreien Teilbereich (4, 114a, 114b, 114c) aufweist, und daß die Wandteil-Dicke im Bereich der Sollbruchstellen (2, 113, 123) nicht oder nur in geringem Maße reduziert ist.

2. Wandteil für Schalkörper nach Anspruch 1,
dadurch gekennzeichnet,
daß die Fasern (3) im Bereich der Sollbruchstellen (2, 113, 123) in Wanddikkenrichtung ungleich verteilt und lokal konzentriert sind.

3. Wandteil für Schalkörper nach Anspruch 2,
dadurch gekennzeichnet,
daß die Fasern (3) im Bereich der Sollbruchstellen (2, 113, 123) auf der dem Ortbeton abgewandten Seite des Wandteils (1, 11, 12, 13, 14) konzentriert sind.

4. Wandteil für Schalkörper nach Anspruch 1,
dadurch gekennzeichnet,
daß sich der nahezu faserfreie Teilbereich (4, 114a, 114b, 114c) über maximal etwa die Hälfte der Wandteil-Dicke erstreckt.

5. Wandteil für Schalkörper nach Anspruch 1,
dadurch gekennzeichnet,
daß das Wandteil (1, 11, 12, 13, 14) aus einer Vielzahl gleichartiger und rasterartig nebeneinander angeordneter Wandelemente (11, 112, 121, 122) besteht, die über die Trennzonen einstückig miteinander verbunden sind.

6. Wandteil für Schalkörper nach Anspruch 1,
dadurch gekennzeichnet,
daß die Sollbruchstellen (2, 113, 123) rasterartig über das Wandteil (1, 11, 12, 13, 14) verteilt sind.

7. Verfahren zur Herstellung von Sollbruchstellen in einem Wandteil für Schalkörper nach Anspruch 1 für die Erzaugung von Aussparungen mit unterschiedlichen Abmessungen in Betonbauteilen, wobei das Wandteil aus faserverstärkten, abbindbaren Materialien wie Beton, Harzen oder dergleichen besteht und die Sollbruchstellen mögliche Trennzonen bilden,
dadurch gekennzeichnet,
daß die bei der Herstellung der Wandteile (1, 11, 12, 13, 14) vor dem Abbinden im Wandteil-Material schwimmenden Fasern (3) im Bereich der Sollbruchstellen (2, 113, 123) aus einem Teilbereich (4, 114a, 114b, 114c) der Wandteil-Dicke heraus verdrängt werden, daß hierauf der faserfreie Teilbereich ganz oder teilweise mit Beton gefüllt wird, ohne daß die Fasern wieder in den Teilbereich zurückschwimmen.

8. Verfahren zur Herstellung von Sollbruchstellen nach Anspruch 7,
dadurch gekennzeichnet,
daß die Fasern (3) im Bereich der Sollbruchstellen (2, 113, 123) in Wanddikkenrichtung lokal konzentriert werden.

9. Verfahren zur Herstellung von Sollbruchstellen nach Anspruch 7,
dadurch gekennzeichnet,
daß die lokale Verdrängung der Fasern (3) mit Hilfe eines in das flüssige Wandteil-Material eintauchenden Werkzeuges (5) erfolgt.

10. Verfahren zur Herstellung von Sollbruchstellen nach Anspruch 9,
dadurch gekennzeichnet, daß das Herstellen der Sollbruchstelle (2, 113, 123) mit Hilfe eines zylinder- oder quaderförmigen schmalen Werkzeuges (5) erfolgt, das sich parallel zur geplanten Sollbruchstelle erstreckend in das flüssige Wandteil-Material eingetaucht und danach entfernt wird.

11. Verfahren zur Herstellung von Sollbruchstellen nach Anspruch 7,
dadurch gekennzeichnet,
daß das Herstellen der Sollbruchstelle (2, 113, 123) mit Hilfe eines schmalen Werkzeuges erfolgt, das einseitig in einem Endbereich der Sollbruchstelle eingetaucht, entlang des Sollbruchstellen-Verlaufs durch das flüssige Wandteil-Material bis zum anderen Endbereich bei gleichbleibender Eintauchtiefe gezogen und von dort wieder entfernt wird.

## Claims

1. Wall part (1, 11, 12, 13, 14) for formwork bodies, in particular for producing recesses with different dimensions in concrete construction units, wherein the wall part consists of fibre-reinforced materials which can set, such as concrete, resins or the like, and comprises predetermined breaking points (2, 113, 123) for forming possible separation zones,
characterised in that the wall part (1, 11, 12, 13, 14) comprises a sub-region (4, 114a, 114b, 114c) which is at least almost fibre-free in the wall thickness direction in the region of the predetermined breaking points (2, 113, 123), and that the wall part thickness is not reduced, or only to a slight degree, in the region of the predetermined breaking points (2, 113, 123).

2. Wall part for formwork bodies according to claim 1,
characterised in that the fibres (3) are unevenly distributed and locally concentrated in the wall thickness direction in the region of the predetermined breaking points (2, 113, 123).

3. Wall part for formwork bodies according to claim 2,
characterised in that the fibres (3) are concentrated on the side of the wall part (1, 11, 12, 13, 14) which is remote from the in-situ concrete in the region of the predetermined breaking points (2, 113, 123).

4. Wall part for formwork bodies according to claim 1,
characterised in that the almost fibre-free sub-region (4, 114a, 114b, 114c) extends over approximately half the wall part thickness at the most.

5. Wall part for formwork bodies according to claim 1,
characterised in that the wall part (1, 11, 12, 13, 14) consists of a plurality of like wall elements (11, 112, 121, 122) which are disposed side by side in the form of a grid and are integrally connected together via the separation zones.

6. Wall part for formwork bodies according to claim 1,
characterised in that the predetermined breaking points (2, 113, 123) are distributed over the wall part (1, 11, 12, 13, 14) in the form of a grid.

7. Method for producing predetermined breaking points in a wall part for formwork bodies according to claim 1 for producing recesses with different dimensions in concrete construction units, wherein the wall part consists of fibre-reinforced materials which can set, such as concrete, resins or the like, and the predetermined breaking points form possible separation zones,
characterised in that the fibres (3) floating in the wall part material prior to setting when the wall parts (1, 11, 12, 13, 14) are produced are displaced in the region of the predetermined breaking points (2, 113, 123) from a sub-region (4, 114a, 114b, 114c) of the wall part thickness, and that the fibre-free sub-region is hereupon filled completely or partly with concrete, without the fibres floating back into the sub-region.

8. Method for producing predetermined breaking points according to claim 7,
characterised in that the fibres (3) are locally concentrated in the wall thickness direction in the region of the predetermined breaking points (2, 113, 123).

9. Method for producing predetermined breaking points according to claim 7,
characterised in that the local displacement of the fibres (3) is effected by means of a tool (5) dipping into the liquid wall part material.

10. Method for producing predetermined breaking points according to claim 9,
characterised in that the predetermined breaking point (2, 113, 123) is produced by means of a narrow cylindrical or cuboid tool (5) which dips into the liquid wall part material parallel to the intended predetermined breaking point and is then removed.

11. Method for producing predetermined breaking points according to claim 7,
characterised in that the predetermined breaking point (2, 113, 123) is produced by means of a narrow tool which dips into an end region of the predetermined breaking point on one side, is drawn through the liquid wall part material along the path of the predetermined breaking points to the other end region at a constant depth of immersion and removed from this region.

## Revendications

1. Panneau (1, 11, 12, 13, 14) pour coffrage, notamment pour la production d'évidements de différentes dimensions dans des éléments en béton, le panneau étant constitué de matériaux durcissables renforcés par des fibres, tels que du béton, des résines ou analogues, et présentant des lignes de rupture (2, 113, 123) pour former des zones de détachement éventuel, **caractérisé** en ce que le panneau (1, 11, 12, 13, 14) présente, dans la région des lignes de rupture (2, 113, 123), une région partielle (4, 114a, 114b, 114c) au moins presque totalement dépourvue de fibres, et en ce que l'épaisseur du panneau n'est pas réduite dans la région des lignes de rupture (2, 113, 123), ou ne l'est que dans une faible mesure.

2. Panneau pour coffrage selon la revendication 1, **caractérisé** en ce que les fibres (3) sont, dans la région des lignes de rupture (2, 113, 123), localement concentrées et irrégulièrement réparties dans la direction de l'épaisseur du panneau.

3. Panneau pour coffrage selon la revendication 2, **caractérisé** en ce que les fibres (3) sont, dans la région des lignes de rupture (2, 113, 123), concentrées sur le côté du panneau (1, 11, 12, 13, 14) qui est opposé au béton coulé en place.

4. Panneau pour coffrage selon la revendication 1, **caractérisé** en ce que la région partielle (4, 114a, 114b, 114c) quasiment dépourvue de fibres s'étend sur au plus environ la moitié de l'épaisseur du panneau.

5. Panneau pour coffrage selon la revendication 1, **caractérisé** en ce que le panneau (1, 11, 12, 13, 14) est constitué d'une pluralité d'éléments de panneau (11, 112, 121, 122) de même type, juxtaposés en quadrillage, qui sont mutuellement reliés d'un seul tenant par l'intermédiaire des zones de détachement.

6. Panneau pour coffrage selon la revendication 1, **caractérisé** en ce que les lignes de rupture (2, 113, 123) sont réparties en quadrillage sur le panneau (1, 11, 12, 13, 14).

7. Procédé de réalisation de lignes de rupture dans un panneau pour coffrage selon la revendication 1 destiné à la production d'évidements de différentes dimensions dans des éléments en béton, le panneau étant constitué de matériaux durcissables renforcés par des fibres, tels que du béton, des résines ou analogues, et les lignes de rupture formant des zones de détachement éventuel, **caractérisé** en ce que les fibres (3), flottant avant le durcissement dans le matériau du panneau lors de la fabrication des panneaux (1, 11, 12, 13, 14), sont, dans la région des lignes de rupture (2, 113, 123), refoulées hors d'une région partielle (4, 114a, 114b, 114c) de l'épaisseur du panneau, et en ce que la région partielle dépourvue de fibres est ensuite totalement ou partiellement remplie de béton sans que les fibres flottantes retournent dans ladite région partielle.

8. Procédé de réalisation de lignes de rupture selon la revendication 7, **caractérisé** en ce que les fibres (3) sont, dans la région des lignes de rupture (2, 113, 123), localement concentrées dans la direction de l'épaisseur du panneau.

9. Procédé de réalisation de lignes de rupture selon la revendication 7, **caractérisé** en ce que le refoulement local des fibres (3) s'effectue à l'aide d'un outil (5) plongeant dans le matériau liquide du panneau.

10. Procédé de réalisation de lignes de rupture selon la revendication 9, **caractérisé** en ce que la réalisation des lignes de rupture (2, 113, 123) s'effectue à l'aide d'un outil étroit (5) de forme cylindrique ou parallélépipédique, qui est plongé dans le matériau liquide du panneau en s'étendant parallèlement à la ligne de rupture prévue, puis est retiré.

11. Procédé de réalisation de lignes de rupture selon la revendication 7, **caractérisé** en ce que la réalisation des lignes de rupture (2, 113, 123) s'effectue à l'aide d'un outil étroit qui est plongé d'un côté dans une région terminale de la ligne de rupture, est tiré, avec une profondeur d'immersion constante, le long du développement de la ligne de rupture à travers le matériau liquide du panneau jusqu'à l'autre région terminale, d'où il est retiré.
